# EUROPÄISCHE PATENTSCHRIFT

(11) **EP 2 427 975 B1**
(45) Veröffentlichungstag und Bekanntmachung des Hinweises auf die Patenterteilung: **30.04.2014**
(21) Anmeldenummer: 10726579.5
(22) Anmeldetag: 06.05.2010
(51) Int. Cl.: H04B 10/112

(54) **HYBRIDKOMMUNIKATIONSVORRICHTUNG FÜR EINE HOCHRATIGE DATENÜBERTRAGUNG ZWISCHEN BEWEGLICHEN UND/ODER FESTSTEHENDEN PLATTFORMEN**
HYBRID COMMUNICATION APPARATUS FOR HIGH RATE DATA TRANSMISSION BETWEEN MOVING AND/OR STATIONARY PLATFORMS
DISPOSITIF DE COMMUNICATION HYBRIDE POUR UNE TRANSMISSION DE DONNÉES HAUT DÉBIT ENTRE DES PLATES-FORMES MOBILES ET/OU FIXES

(30) Priorität: 06.05.2009 DE 102009025755
(43) Veröffentlichungstag der Anmeldung: 14.03.2012
(73) Patentinhaber: Synopta GmbH, 9034 Eggersriet (CH); Fischer, Edgar, 8555 Müllheim (CH); Wandernoth, Bernhard, 9602 Bazenheid (CH)
(72) Erfinder: FISCHER, Edgar, CH-8555 Müllheim (CH); WANDERNOTH, Bernhard, CH-9602 Bazenheid (CH); CZICHY, Reinhard, CH-9034 Eggersriet (CH)
(74) Vertreter: Heisel, Wolfgang
(86) Internationale Anmeldenummer: PCT/IB2010/052004
(87) Internationale Veröffentlichungsnummer: WO 2010/128478

(56) Entgegenhaltungen:
- EP-A2- 1 370 014
- US-A- 5 777 768
- US-A1- 2002 097 468
- US-A1- 2004 033 078
- US-A1- 2004 062 551
- US-A1- 2004 146 296

## Beschreibung

Die vorliegende Erfindung bezieht sich auf eine Datenkommunikation und insbesondere auf eine Technik zur Durchführung von hochratigen Datenübertragungen.

### Hintergrund der Erfindung

Ein Vielfach-Eingabe-, Vielfach-Ausgabe- (multiple input, multiple output, MIMO) Kommunikationssystem verwendet viele Übertragungsantennen und viele Empfangsantennen für die Durchführung einer Datenübertragung. Ein MIMO-Kanal bildet sich durch die Übertragungs- und Empfangsantennen und kann in unabhängige Kanäle zerlegt werden. Jeder von diesen unabhängigen Kanälen wird auch als ein räumlicher Unterkanal oder Eigenmodus von dem MIMO-Kanal bezeichnet. Derartige Systeme sind insbesondere aus der Mobilfunktechnik bekannt und werden beispielsweise in der EP 1 117 197A2 beschrieben. MIMO (Multiple Input Multiple Output) bezeichnet in der Nachrichtentechnik die Nutzung mehrerer Sende- und Empfangsantennen zur drahtlosen Kommunikation. Dies ist die Grundlage für spezielle Codierungsverfahren, die nicht nur die zeitliche, sondern auch die räumliche Dimension zur Informationsübertragung nutzen *(Space-Time Coding).* Das Prinzip, welches bei MIMO zur Anwendung kommt, stammt aus der militärischen Radartechnik, die schon seit vielen Jahren genutzt wird. Dort setzt man nicht nur eine, sondern mehrere baugleiche Antennen ein. Die Antennen haben zueinander mindestens eine halbe Wellenlänge (lambda/2) der Trägerfrequenz Abstand. Der bis dahin üblichen Frequenz-Zeit-Matrix wird eine 3. Dimension hinzugefügt. Dabei wird das Datensignal über mehrere Antennen gesendet. Gleichzeitig werden auch mehrere Empfangsantennen verwendet. Die signalverarbeitende Empfangseinheit bekommt durch mehrere Funksignale eine räumliche Information. Denn bei zwei Antennen trifft dasselbe Funksignal aus zwei verschiedenen Richtungen beim Empfänger ein. Jedes eingehende Funksignal weist in der Regel einen eigenen "räumlichen Fingerabdruck" auf, der auch "Spatial Signature" genannt wird. Der Empfänger setzt die Signale wieder passend zusammen. Dadurch verbessert sich die Leistung des ganzen Funksystems erheblich.

Dadurch lassen sich Qualität Bitfehlerhäufigkeit und Datenrate einer drahtlosen Verbindung deutlich erhöhen. MIMO-Systeme können wesentlich mehr bit/s pro genutztem Hz Bandbreite übertragen und haben somit eine höhere spektrale Effizienz als konventionelle SISO- oder SIMO-System.

Die einfachste MIMO-Hardware besteht aus zwei Sendeantennen und einer Empfangsantenne. Um die Leistungsfähigkeit optimal auszunutzen, werden Antennen immer paarweise eingesetzt. Dadurch vereinfachen sich die MIMO-Signalverarbeitungsalgorithmen und führen zu einem optimalen Signal-Rausch-Abstand.

Die Bandbreite lässt sich mit der Anzahl der Sendeantennen linear erhöhen. Das Trennen der einzelnen Signale ist eine einfache lineare Matrizenrechnung, die von leistungsfähigen Prozessoren berechnet wird. Geht man von dieser Rechnung aus, dann liesse sich theoretisch die Übertragungskapazität ins unendliche steigern.

Jeweils 8 Sende- und Empfangsantennen gelten als das Maximum. Die Vorteile von Mehrfach-Antennen-Systemen sind folgende:
- grössere Empfangsleistung (Gruppengewinn)
- Störerunterdrückung (Interferenzunterdrückungsgewinn)
- bessere Verbindungsqualität (Diversitätsgewinn)
- höhere Übertragungsraten (Multiplexgewinn)

Insbesondere zur Datenübertragung werden hochfrequente Übertragungstechniken verwendet, deren Wellenlängen normalerweise bei ca. 18 GHz, 30GHz und 42 GHz liegen.

Um jedoch hochratige Daten übertragen zu können, wird in der Regel eine optische Übertragung bevorzugt. Um eine optische Datenübertragung zu ermöglichen und Toleranzen bei bewegten Sendern und Empfängern (Plattformen) zu berücksichtigen, wird eine adaptive Optik bevorzugt. Diese Ausführung ist jedoch sehr kostenintensiv und insbesondere gegenüber Umwelteinflüssen empfindlich.

Ein wesentlicher Vorteil der Hochfrequenzübertragung liegt darin, dass eine Datenübertragung auch bei Schlechtwetterbedingungen, insbesondere mit adaptiver Datenrate, möglich ist. Dadurch können bewegten Plattformen, auf denen Sender bzw. Empfänger angeordnet sind, entsprechend nachgeführt werden. Die Störempfindlichkeiten sind jedoch sehr hoch, sodass - an sich wie aus terrestrischer oder Weltraumkommunikation bekannt ist- auf ein Laserkommunikationsverfahren zurückgegriffen werden muss.

Diese optischen Systeme bringen den Vorteil, dass diese für hochratige Datenübertragung geeignet sind. Bei einer Wellenlänge von 0,5 bis 2,2 µm (Mikrometer) ist die Datenübertragung sehr hoch, sie ist jedoch von insbesondere Wetterbedingungen und sonstigen optischen Einflüssen sehr abhängig.

In diesem Zusammenhang ist aus der US 2002/0097468 A1 eine Hybridkommunikationsvorrichtung bekannt, mit der Daten drahtlos entweder elektrisch oder optisch über so genannte Freifelder übertragen werden können, das heisst entweder mittels Hochfrequenz oder Lichtwellen, sprich Laser. Je nach den Wetterbedingungen erfolgt die Übertragung zum Beispiel bei Nebel durch den Einsatz von einem Hochfrequenzsender/-empfänger oder bei guter Sicht durch mehrere optische Sender und einem optischen Empfänger. Diese Druckschrift befasst sich dabei im Wesentlichen mit der optischen Datenübertragung, wogegen die Hochfrequenztechnik nur am Rande als Hilfsmittel bei schlechtem Wetter in der Form einer Blackbox erwähnt ist. Durch die hier vorgesehenen mehreren voneinander unabhängigen optischen Sender wird zwar ein Bündel von Lichtstrahlen erreicht, um ein Ziel zu treffen, jedoch wird dieses dann wiederum durch nur einen optischen Empfänger aufgenommen, sodass hierbei Datenteile verloren gehen können.

### Aufgabe der Erfindung

Daher ist es Aufgabe der Erfindung, eine Datenübertragungsvorrichtung für sowohl eine hochratige elektrische als auch eine optische Datenübertragung bereit zu stellen, die insbesondere auf beweglichen Plattformen zum Einsatz kommen kann, bei denen Empfänger und Sender oder auch nur ein Element entsprechend beweglich angeordnet sind, wobei hierfür keine sehr kostenintensive adaptive Optik verwendet werden soll.

### Lösung der Aufgabe

Die Lösung der Aufgabe besteht darin, ein so genanntes Hybridterminal bereit zu stellen, bei dem neben der Hochfrequenzeinrichtung die optische Datenübertragung durch mehrere unabhängige optische Sender und Empfänger, die paarweise konzentrisch um den Hochfrequenzsender/ -empfänger angeordnet sind, derart erfolgt, dass die Daten in einer Vielzahl von einzelnen Lichtwellen durch die optischen Sender aussendbar und durch die zahlenmässig gleichen optischen Empfänger wieder empfangbar und sodann aus diesen einzelnen Lichtwellen die Daten wieder rekonstruierbar sind. Hierbei ist vorgesehen, die Datenübertragung über die Hochfrequenzeinrichtung als Grundkommunikation zu verwenden und die optische Übertragung als so genannten "Boost" -sofern es die entsprechenden wetterbedingten Rahmenbedingungen zulassen- zuzuschalten.

Die Datenübertragungen im Hochfrequenzbereich liegen zwischen 0,2 Mbps und 100 Mbps, die im optischen Bereich liegen zwischen 1 Mbps und 2,4 Gbps.

### Vorteile der Erfindung

Optische Übertragungssysteme sind aufgrund der adaptiven Optik, insbesondere bei beweglichen Plattformen, sehr kostenintensiv. Dies bedeutet ,um bei mindestens einer beweglichen Plattform den Empfänger zu erreichen, dass sehr hohe technische Aufwendungen notwendig sind, um eine Übertragung auch über eine weite Strecke (grösser als 10 km) zu ermöglichen. Erfindungsgemäss ist vorgesehen, und dies ist ein erheblicher Vorteil der Erfindung, neben der Hochfrequenzübertragung zusätzlich die optische Übertragung derart auszubilden, dass sie nach dem so genannten MIMO-Verfahren ausgelegt ist. Dies bedeutet, dass Mehrfach-Sendestrahlen mit redundanter und verschränkter Kodierung gegenüber einem Mehrfachempfänger eingesetzt werden. Dadurch werden mehrere kleine Strahlen mit mehreren Empfängern eingesetzt, wodurch ein hoher Gewinn durch die Kodierung entsteht und eine Robustheit durch Mehrfachredundanz gegeben ist. Ferner ist als wesentlicher Vorteil anzusehen, dass Sender- und Empfängeraufbau an sich sehr einfach gestaltet sein können, da dieser aus üblichen Bauteilen hergestellt werden kann, die aus dem Stand der Technik bekannt sind. Durch eine entsprechende kompakte Ausführung der Vorrichtung ist es möglich, eine präzise Nachführung, auch beispielsweise unter Einsatz einer Sende- bzw. Empfängerplattform, auf einem beweglichen Objekt, beispielsweise eines Schiff, durchzuführen.

Aufgrund der Einfachheit der Übertragungstechnik entsteht ein hybrides System mit einer sehr geringen Komplexität, jedoch einer hohen Systemzuverlässigkeit, bei dem sowohl die Hochfrequenztechnik als auch die optische Technik zur Datenübertragung eingesetzt werden.

Die Erfindung ist derart ausgelegt, dass zur Übertragung entsprechender Daten über eine weite Strecke, insbesondere bei beweglichen Plattformen, zunächst die Hochfrequenztechnik eingesetzt wird, um Sender und Empfänger eine Kommunikationsebene bereit zu stellen. Erlauben es die Sichtbedingungen (die optischen Grundvoraussetzungen), so wird entweder alternativ oder zusätzlich eine Datenübertragung per Licht hinzugeschaltet, sodass die Datenrate vervielfacht wird. Dies bedeutet, dass mehrere Sender in MIMO-Verfahren mit vielen kleinen Sendeaperturen Lichtwellen aussenden, die von einer Vielzahl von Empfängern empfangen werden. Unter einer Apertur wird hierbei in der Optik die Öffnung einer Linse verstanden, durch die Licht einfallen oder austreten kann. Eine entsprechende Software rekonstruiert die Daten derart, dass auch beispielsweise nicht auf den Empfänger treffende Daten die durch Objekte oder Ähnliches ausgeblendet werden, wieder rekonstruierbar sind.

Um zu verhindern, dass die Daten, insbesondere im optischen Bereich, ungewollt abgefangen werden, ist vorgesehen, die einzelnen emittierenden Daten zu verschlüsseln beziehungsweise zu kodieren. Jede einzelne Apertur erhält eine entsprechende Kodierung, die dann von den Empfängern entsprechend dekodiert wird.

Die eigentlichen Sender bestehen aus herkömmlichen Diodenlasern mit einem entsprechenden Glasfaser- oder Festkörperverstärker und einem Senderkollimator, sodass diese auf den Empfänger entsprechend gerichtet werden.

Vorzugsweise ist die Vorrichtung noch zusätzlich mit einem GPS Satellitensender beziehungsweise -empfänger gekoppelt, sodass die Position, Lage und Orientierung, insbesondere bei mobilen, beziehungsweise beweglichen Plattformen feststellbar ist und beispielsweise über die Hochfrequenzübertragung an den Empfänger übermittelt werden können.

In der nachfolgenden Beschreibung sowie den Zeichnungen ist ein Ausführungsbeispiel einer solchen Hybridkommunikationsvorrichtung für eine hochratige Datenübertragung dargestellt.

### Zeichnungen

Es zeigen:
- Fig. 1: eine perspektivische Ansicht auf die Hybridkommunikationsvorrichtung;
- Fig. 2: eine schematische Darstellung der Sendeeinrichtung der Hybridkommunikationsvorrichtung;
- Fig. 3: Darstellung eines Blockbildschemas eines Sendekanals der Hybridkommunikationsvorrichtung;
- Fig. 4: Darstellung eines Blockbildschemas eines Empfangskanals, einschliesslich einer entsprechenden Nachführung.
- Fig. 5: eine schematische Darstellung der Empfangs- und Sendeeinheit der Hybridkommunikationsvorrichtung;
- Fig. 6: eine Darstellung eines Blockbildschemas der Funktionsweise der Hybridkommunikationsvorrichtung.

### Beschreibung eines Ausführungsbeispiels

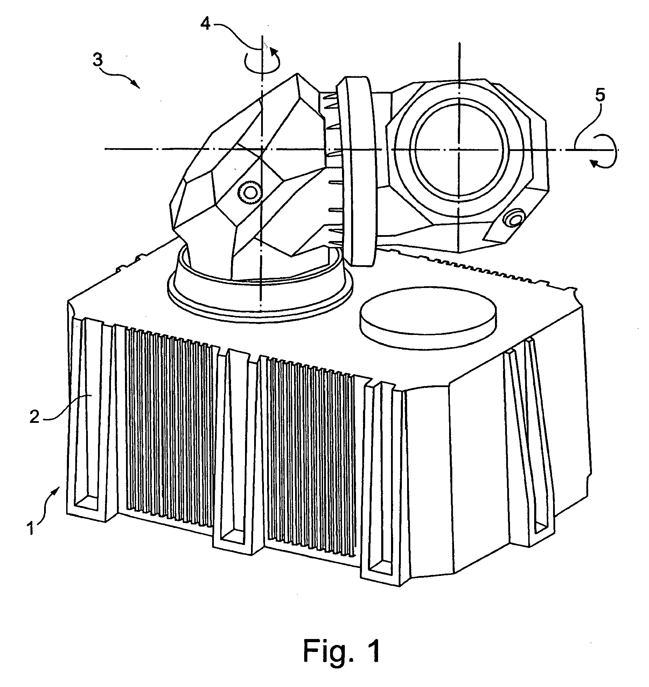

In Fig. 1 ist ein Teil einer Hybridkommunikationsvorrichtung 1 dargestellt. Diese besteht im Wesentlichen aus zwei Elementen, nämlich aus einer Sende- bzw. Empfangseinheit 2 und einer Zieleinrichtung 3. Die Zieleinrichtung 3 ist derart gestaltet, dass sie zumindest entlang den Achsen 4 bzw. 5 verschwenkbar ist. Die Hybridkommunikationsvorrichtung 1 ist derart ausgestaltet, dass es auch Witterungseinflüssen, wie Regen, Schnee, Eis oder Sonne aussetzbar ist.

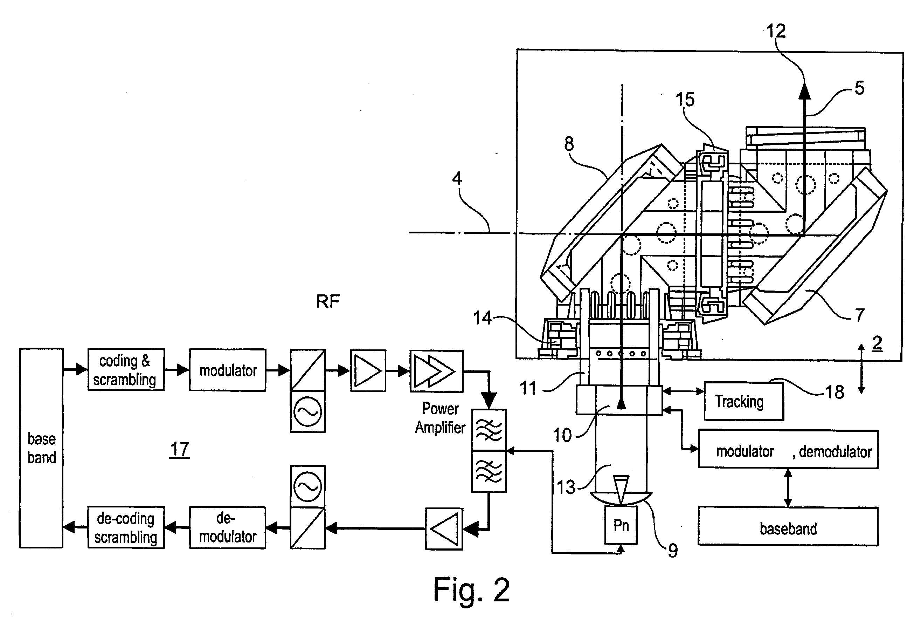

Wie in Fig. 2 dargestellt, besteht die Zieleinrichtung 3 im Wesentlichen aus Komponenten, wie Spiegel 7, 8, die um die Achsen 4 bzw. 5 verschwenkbar sind. Die eigentliche Sende- und Empfangseinrichtung 2 ist innerhalb einer "Black Box" angeordnet, sodass sie von den Witterungseinflüssen geschützt ist.

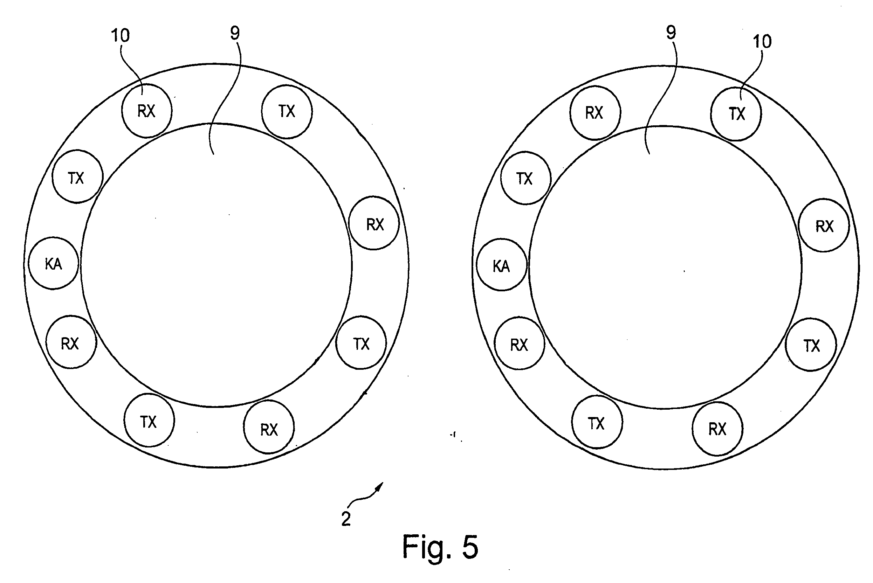

Die Sende- und Empfangseinheit 2, die auch in Fig. 5 schematisch dargestellt ist, besteht aus einem Hochfrequenzsender/ -empfänger 9 und einer Vielzahl voneinander unabhängigen Sendern/Empfängern TX/RX für die optische Datenübertragung, bezeichnet mit 10, die bei dem hier dargestellten Ausführungsbeispiel ringförmig um den Hochfrequenzsender/-empfänger 9 angeordnet sind. Vorzugsweise ist die Anzahl der Sender und Empfänger bei der jeweiligen Sende- bzw. Empfangseinheit 2 gleich.

Die entsprechenden emittierenden Strahlen 11 in Senderichtung sind derart ausgestaltet, dass diese ringförmig über die Spiegel 7, 8 in Pfeilrichtung 12 ausgesendet werden. Über die Spiegel 7, 8 wird, entgegen der Pfeilrichtung 12, das Empfangslicht einer nicht dargestellten entfernten Gegenstation empfangen. Die ringförmig um den Hochfrequenzsender/-empfänger 9 angeordnet Sub-Aperturen der Empfangsoptik schneiden schliesslich aus dem grossen empfangen optischen Strahl einen Teil aus und leitet das Licht mittels Glasfasern zum Demodulator. Die Hochfrequenzstrahlung 13 wird ebenfalls über die Spiegel 7, 8 umgelenkt, da es sich bei den Spiegeln 7,8 um Metallspiegel handelt. Damit wird auch die Hochfrequenzstrahlung in Richtung des Pfeils 12 emittiert. Die Spiegel 7, 8 selbst werden über zwei Stellmotoren 14, 15 in Pfeilrichtung um die Achsen 4, 5 verschwenkt. Eine entsprechende Modulierungs- bzw. Demodulierungseinheit 17 ist der Sendeeinrichtung entsprechend vorgeschaltet. Zusätzlich sind Trackingeinrichtungen 18 basierend auf GPS- bzw. Galileo-Systemen-Empfängern oder ein gleich wirkendes Positionsbestimmungssystem und/oder einer SWIR-Kamera (Short Wave Infrared) vorgesehen.

Durch die Auswertung von differentiellen GPS- beziehungsweise Galileo-Systemen-Signalen lässt sich die Lage oder Neigung der Plattform im 3D-Raum bestimmen sowie ihre Orientierung bezüglich der Nordrichtung.

Somit nutzen sowohl die Hochfrequenzübertragungstechnik als auch die optische Übertragungstechnik eine gemeinsame Steuerungs- beziehungsweise Zieloptik. Die Hochfrequenzseite baut eine entsprechende klassische Richtfunkstrecke zwischen zwei fixen Punkten auf. Es handelt sich um einen zentral angeordneten Hochfrequenzstrahl. Die Optik baut eine MIMO-Verbindung zwischen den entsprechenden Punkten auf. Es handelt sich um eine konzentrisch um den Hochfrequenzstrahl angeordnete Lichtemittierung.

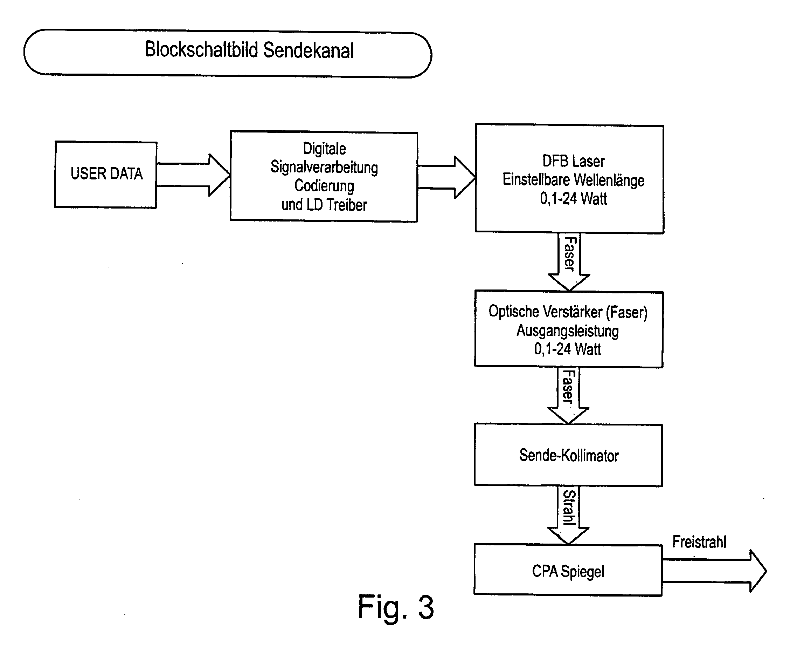

In Fig. 3 ist das Blockschaltbild eines Sendekanals gezeigt. Entsprechende Userdaten werden in digitale Signale umgewandelt, kodiert und dem Diodenlaser übergeben. Über Fasern, Faserverstärker und einem Sendekollimator wird über diesen mittels des zuvor beschriebenen Spiegel die Signale versendet.

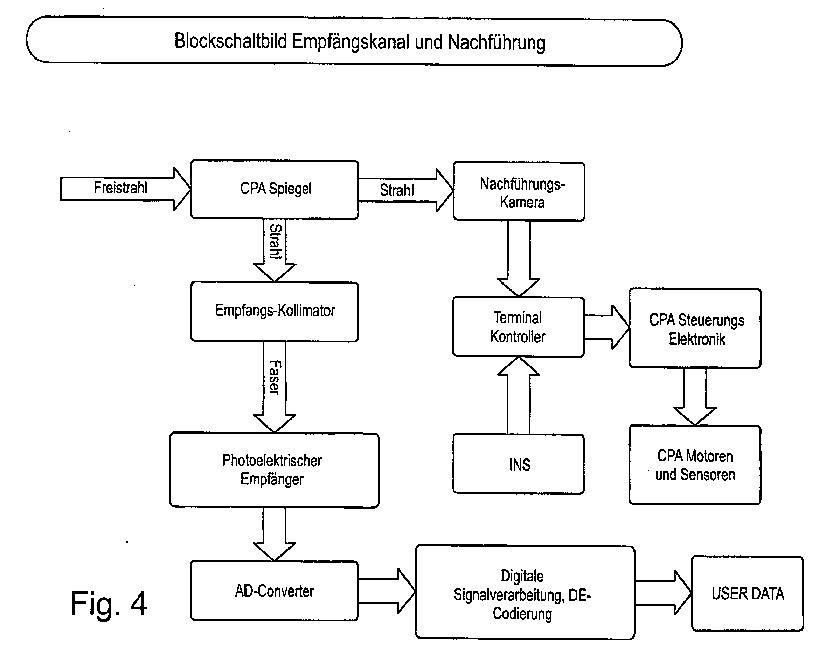

Gemäss dem in Fig. 4 dargestellten Blockschaltbild wird der entsprechende gesendete Strahl empfangen und über Trackingkameras "eingefangen". Ein Empfangskollimator sowie fotoelektrische Empfänger übergeben die empfangenen Lichtsignale, beziehungsweise Hochfrequenzsignale einem Analog-/Digital-Converter, der die entsprechenden Daten dekodiert und als Userdaten - entfernt von dem Sendeterminal - wieder bereitstellt.

In Fig. 5 ist eine schematische Darstellung der Empfangs- und Sendeeinheit 2 der Hybridkommunikationsvorrichtung 1 gezeigt. Sie besteht aus einem Hochfrequenzsender/ -empfänger 9 und einer Vielzahl der voneinander unabhängigen optischen Sendern/Empfängern TX/RX, die bei dem hier dargestellten Ausführungsbeispiel ringförmig um den Hochfrequenzsender/- empfänger 9 angeordnet sind. Vorzugsweise ist die Anzahl der Sender und Empfänger bei der jeweiligen Sende- bzw. Empfangseinrichtung 2 gleich. Ferner sind Sonderfelder vorgesehen (durch KA gekennzeichnet). Sie dienen dazu, beispielsweise besondere Signale für die Zieleinrichtung 2 zu senden beziehungsweise zu empfangen.

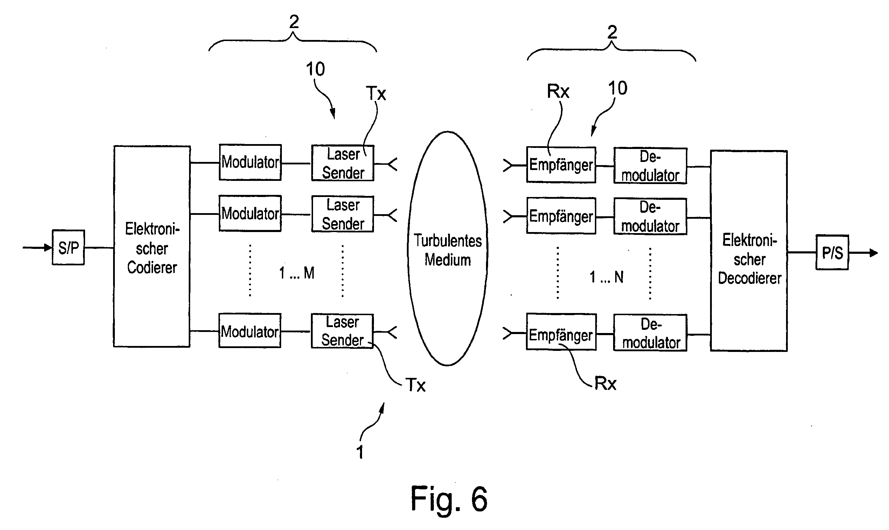

In Fig. 6 ist schematisch die optische MIMO Übertragung dargestellt. Die einfachste MIMO-Hardware besteht aus zwei Sender (M1, M2) und einem Empfänger (N1). Um die Leistungsfähigkeit optimal auszunutzen, werden Antennen (Sender/Empfänger) immer paarweise eingesetzt. Dadurch vereinfachen sich die MIMO-Signalverarbeitungsalgorithmen und führen zu einem optimalen Signal-Rausch-Abstand. Die Bandbreite lässt sich mit der Anzahl der Sendeantennen linear erhöhen. Das Trennen der einzelnen Signale ist eine einfache lineare Matrizenrechnung, die von leistungsfähigen Prozessoren berechnet wird. Geht man von dieser Rechnung aus, dann liesse sich theoretisch die Übertragungskapazität ins unendliche steigern (1....M, 1.....N).

Bei dem hier bereitgestellten Signal findet vor der eigentlichen Modulation eine Kodierung statt. Dies dient dazu, die Datensicherheit zu gewährleisten. Die Datenübertragung erfolgt über die Sender TX. Nahezu unabhängig von dem Medium werden die einzelnen Empfänger RX die Signale empfangen. Nach einer Demodulierung und Dekodierung stehen das übertragene Signal und die damit verbundene Information zur Verfügung.

Somit ist eine Übertragungsvorrichtung insbesondere für hochratige Daten bereitgestellt worden, mittels der auch auf bewegten Plattformen Daten versendet beziehungsweise empfangen werden können. Abhängig von der entsprechenden Umgebung (beispielsweise Wetter) kann zur hochratigen Datenübertragung als "Boost" die optische Datenübertragung 10 hinzugeschalten werden, die vorzugsweise und hier bei der vorliegenden Hybridkommunikationsvorrichtung 1 auch in vorteilhafter Weise dieselbe Nachführung beziehungsweise Zieloptik verwendet, wie sie bei der bereits zuvor beschriebene Hochfrequenzübertragung zur Anwendung kommt.. Dadurch kann ein kompaktes insbesondere auf beweglichen Plattformen anordenbares Hybridterminal (Hochfrequenz- und optische Übertragung über dieselbe Zieleinrichtung) bereitgestellt werden, das auch Witterungseinflüssen ausgesetzt werden kann, ohne dass eine entsprechende adaptive Optik notwendig ist. Die eigentlichen Sender beziehungsweise Empfänger sind ausserhalb der Nachführungseinheit angeordnet, sodass sie in allzu beliebigen Punkten angeordnet werden können, ohne dass diese den Witterungseinflüssen ausgesetzt werden.

### BEZUGSZEICHENLISTE

### Hybridkommunikationsvorrichtung für eine hochratige Datenübertragung zwischen beweglichen und/oder feststehenden Plattformen

- 1.: Hybridkommunikationsvorrichtung
- 2.: Sende bzw. Empfangseinheit
- 3.: Zieleinrichtung
- 4.: Achsen
- 5.: Achsen
- 6.: -
- 7.: Spiegel
- 8.: Spiegel
- 9.: Hochfrequenzsender/ -empfänger
- 10.: optische Datenübertragung
- 11.: emittierenden Strahlen
- 12.: Pfeilrichtung
- 13.: Hochfrequenzstrahlung
- 14.: Stellmotoren
- 15.: Stellmotoren
- 16.: -
- 17.: Modulierungs- bzw. Demodulierungseinheit
- 18.: Trackingeinrichtungen
- TX: Sendeapertur
- RX: Empfangsapertur
- 1...M, M 1, M2: Sendeeinheit
- 1...N, N1, N2: Empfangseinheit

## Patentansprüche

1. Hybridkommunikationsvorrichtung für eine hochratige Datenübertragung zwischen beweglichen und/oder feststehenden Plattformen, bestehend aus mindestens einer Sende- und Empfangseinheit (2), wobei hierfür eine Hochfrequenztechnik mit einem Hochfrequenzsender/-empfänger (9) und wahlweise alternativ oder zusätzlich eine optische Datenübertragung (10) mit mehreren voneinander unabhängigen optischen Sendern (TX) für Lichtwellen sowie eine Einrichtung für deren Empfang vorgesehen sind, **dadurch gekennzeichnet, dass** die optische Datenübertragung (10) durch die voneinander unabhängigen optischen Sender (TX) sowie durch die Einrichtung in der Form einer den Sendern (TX) entsprechenden Anzahl an voneinander unabhängigen optischen Empfängern ( RX), die gemeinsam mit den Sendern (TX) paarweise konzentrisch um den Hochfrequenzsender/-empfänger (9) angeordnet sind, derart erfolgt, dass Daten in einer Vielzahl von einzelnen Lichtwellen durch die optischen Sender (TX) aussendbar und durch die optischen Empfänger (RX) wieder empfangbar und sodann aus diesen einzelnen Lichtwellen Daten rekonstruierbar sind.

2. Hybridkommunikationsvorrichtung nach Anspruch 1, **dadurch gekennzeichnet, dass** die unabhängigen optischen Sender/Empfänger (TX/RX) ringförmig um den Hochfrequenzsenderempfänger (9) angeordnet sind.

3. Hybridkommunikationsvorrichtung nach Anspruch 1 oder 2, **dadurch gekennzeichnet, dass** die einzelnen optischen Sender/Empfänger Aperturen für den Ein- beziehungsweise Austritt der Lichtwellen aufweisen, deren Durchmesser im Verhältnis zum Durchmesser des Hochfrequenzsenders/ - empfängers (9) kleiner sind.

4. Hybridkommunikationsvorrichtung nach einem der Ansprüche 1 - 3, **dadurch gekennzeichnet, dass** sowohl für die Hochfrequenzübertragungstechnik als auch für die optische Übertragungstechnik eine gemeinsame Richtungssteuerung vorgesehen ist.

5. Hybridkommunikationsvorrichtung nach einem der vorhergehenden Ansprüche, **dadurch gekennzeichnet, dass** diese zusätzlich mit einer Trackingvorrichtung (18) gekoppelt ist, die aus einem GPS System oder einem gleichwertigen Positionsbestimmungssystem besteht.

6. Hybridkommunikationsvorrichtung nach mindestens einem der vorhergehenden Ansprüche, **dadurch gekennzeichnet, dass** die Sende- und Empfangseinrichtung (2) eine Zieleinrichtung (3) zu deren Ausrichtung bezüglich Senden und Empfangen umfasst.

7. Hybridkommunikationsvorrichtung nach Anspruch 6, **dadurch gekennzeichnet, dass** die Zieleinrichtung (3) derart gestaltet ist, dass diese zumindest entlang von Achsen (4 beziehungsweise 5) schwenkbar ist.

8. Hybridkommunikationsvorrichtung nach Anspruch 7, **dadurch gekennzeichnet, dass** diese eine Einrichtung (KA) aufweist, mit der Signale für die Zieleinrichtung (3) send- beziehungsweise empfangbar sind.

## Claims

1. Hybrid communication apparatus for high-rate data transmission between moving and/or stationary platforms, consisting of at least one transmitting and receiving unit (2), in which case radio-frequency technology with a radio-frequency transmitter/receiver (9) and optionally alternatively or additionally optical data transmission (10) with a plurality of mutually independent optical transmitters (TX) for light waves and a device for receiving the latter are provided for this purpose, **characterized in that** the optical data transmission (10) is effected by the mutually independent optical transmitters (TX) and by the device in the form of a number of mutually independent optical receivers (RX), which corresponds to the transmitters (TX), which receivers are arranged, together with the transmitters (TX), in pairs concentrically around the radio-frequency transmitter/receiver (9), in such a manner that data can be emitted by the optical transmitters (TX) in a multiplicity of individual light waves and can be received again by the optical receivers (RX), and data can then be reconstructed from these individual light waves.

2. Hybrid communication apparatus according to Claim 1, **characterized in that** the independent optical transmitters/receivers (TX/RX) are arranged in an annular manner around the radio-frequency transmitter/receiver (9).

3. Hybrid communication apparatus according to Claim 1 or 2, **characterized in that** the individual optical transmitters/receivers have apertures for the entry and exit of the light waves, the diameters of which are smaller than the diameter of the radio-frequency transmitter/receiver (9).

4. Hybrid communication apparatus according to one of Claims 1-3, **characterized in that** common direction control is provided both for the radio-frequency transmission technology and for the optical transmission technology.

5. Hybrid communication apparatus according to one of the preceding claims, **characterized in that** said apparatus is additionally coupled to a tracking apparatus (18) which consists of a GPS system or an equivalent positioning system.

6. Hybrid communication apparatus according to at least one of the preceding claims, **characterized in that** the transmitting and receiving device (2) comprises an aiming device (3) for its orientation with respect to transmission and reception.

7. Hybrid communication apparatus according to Claim 6, **characterized in that** the aiming device (3) is configured such that it can be pivoted at least along axes (4 and 5).

8. Hybrid communication apparatus according to Claim 7, **characterized in that** said apparatus has a device (KA) which can be used to transmit and receive signals for the aiming device (3).

## Revendications

1. Dispositif de communication hybride pour transfert de données à haut débit entre des plateformes mobiles et/ou des plateformes fixes, le dispositif étant constitué d'au moins une unité (2) d'émission et de réception qui utilise une technique à haute fréquence avec un émetteur-récepteur (9) à haute fréquence et sélectivement, en variante ou en supplément, un transfert optique (10) de données à l'aide de plusieurs émetteurs optiques (TX) d'ondes lumineuses, indépendants les uns des autres, ainsi qu'un dispositif pour leur réception,
**caractérisé en ce que**
le transfert optique (10) de données par les émetteurs optiques (TX) indépendants les uns des autres ainsi que par le dispositif qui présente la forme d'un nombre de récepteurs optiques (RX) indépendants les uns des autres qui correspond à celui des émetteurs (TX) et qui sont disposés conjointement avec les émetteurs (TX) par paires concentriquement autour de l'émetteur-récepteur (9) à haute fréquence s'effectue de telle sorte que les données peuvent être émises par les émetteurs optiques (TX) et reçues par les récepteurs optiques (RX) en plusieurs ondes lumineuses distinctes, les données pouvant alors être reconstruites à partir de ces différentes ondes lumineuses.

2. Dispositif de communication hybride selon la revendication **1, caractérisé en ce que** les émetteurs-récepteurs optiques (TX/RX) indépendants sont disposés en anneau autour de l'émetteur-récepteur (9) à haute fréquence.

3. Dispositif de communication hybride selon les revendications 1 ou 2, **caractérisé en ce que** les différents émetteurs-récepteurs optiques présentent pour l'entrée ou la sortie des ondes lumineuses des ouvertures dont le diamètre est plus petit que le diamètre de l'émetteur-récepteur (9) à haute fréquence.

4. Dispositif de communication hybride selon l'une des revendications 1 à 3, **caractérisé en ce qu'une** commande directionnelle commune est prévue à la fois en technique de transfert à haute fréquence et en technique de transfert optique.

5. Dispositif de communication hybride selon l'une des revendications précédentes, **caractérisé en ce qu**'il est de plus couplé à un dispositif de suivi (18) constitué d'un système GPS ou d'un système similaire de détermination de position.

6. Dispositif de communication hybride selon l'une des revendications précédentes, **caractérisé en ce que** le dispositif d'émission et de réception (2) comporte un dispositif de visée (3) qui permet d'orienter son émission et sa réception.

7. Dispositif de communication hybride selon la revendication 6, **caractérisé en ce que** le dispositif de visée (3) est configuré de manière à pouvoir pivoter au moins le long d'axes (4 ou 5).

8. Dispositif de communication hybride selon la revendication 7, **caractérisé en ce qu**'il présente un dispositif (KA) qui permet d'émettre ou de recevoir des signaux destinés au dispositif de visée (3).
